# EUROPEAN PATENT SPECIFICATION

(11) **EP 1 348 817 B1**
(45) Date of publication and mention of the grant of the patent: **12.10.2011**
(21) Application number: 03004788.0
(22) Date of filing: 05.03.2003
(51) Int. Cl.: E04B 1/80

(54) **Insulated plate for covering or padding building structures**
Isolierplatte zum Bedecken oder Schützen einer Gebäudestruktur
Panneau isolant pour couvrir ou protéger des structures de construction

(30) Priority: 27.03.2002 IT BO20020027 U
(43) Date of publication of application: 01.10.2003
(73) Proprietor: EUR.EX S.r.l., 47899 Serravalle (SM)
(72) Inventor: Santi, Emiliano, 47899 Serravalle (SM)
(74) Representative: Porsia, Attilio

(56) References cited:
- EP-A1- 0 245 885
- EP-A1- 0 254 530
- WO-A1-80/01702
- DE-A1- 2 909 725
- DE-A1- 3 039 579
- GB-A- 2 041 292
- US-A- 4 569 872
- US-A- 4 707 393

## Description

The present invention relates to a plate for padding and covering building structures, carried out with any suitable material, for instance by molding and/or hot extrusion of a coextruded plate made of multi-layer plastic material. In particular, the invention relates to insulated covering or padding plates, provided integrally with their lower surface with at least a layer having a suitable thickness made of an expanded resin, usually a polyurethane resin, or of other materials such as for instance rock wool, which has such characteristics to give the manufactured item good properties of heat and sound insulation.

At the state of the art insulated plates consist of a layer of insulating material, coated on its bottom with a sheet made of paper, aluminum, metal, bitumen or any other single-layer material, suitably treated so as to adhere firmly to said insulating layer and with a thickness of few tenths or sometimes also of few thousandths. This sheet ensures the dismantling of the structure from the forming mold of the insulating layer and also grants a minimum mechanical resistance and stiffness to the surface to be covered with said layer, in accordance with the features of the material said bottom sheet is made of.

Prior art document US 4 569 872 discloses an insulated plate for padding and covering building structures, comprising an outer plate comprising an intermediate insulating layer made from any suitable insulating material, and a final protecting layer integral with the larger surface of said insulating layer. The said final layer is formed by a cell-like extruded thermoplastic material, which greatly improves the mechanical resistance and the properties of heat and sound insulation of the whole structure.
Prior art document DE 29 09 725 discloses a multi-layer plate composed of at least two parallel layers with ribs defining spaces which are filled with a suitable material.

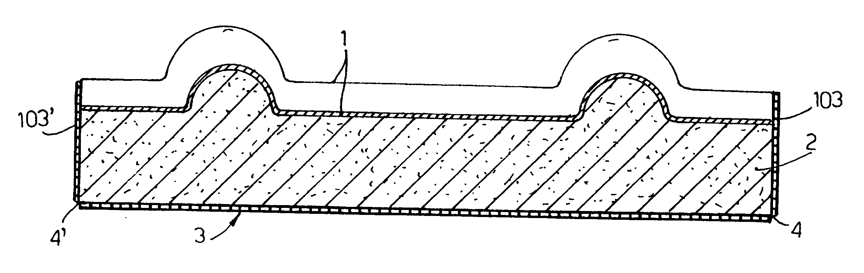

According to the present invention, in the figure the numeral 1 refers to the primary covering plate, made of coextruded plastic material or of any other suitable material, the numeral 2 refers to the insulating layer made for instance of expanded polyurethane resin, and the numeral 3 refers to the thin plate of so-called cell-like extruded plastic material, consisting outside of two thin plane and parallel walls, interconnected by means of inner walls perpendicular to the aforesaid outer walls and placed at the same distance one with respect to the other, so as to form a plurality of parallel channels or cells, which are preferably open on the opposite ends of the plate 3, so that air can freely circulate therein.

The plate 3 is carried out for instance with polypropylene-based thermoplastic materials and is preferably chosen with such a thickness to be supplied on the application area rolled up on a spool, so as to be easily unrolled and suited to the various application needs. The following important advantages were achieved by using a plate 3 with a basis weight of about 500 g/sqm, i.e. with an outer thickness of 1 to 4 mm, for instance of about 2-2.5 mm. It was possible to increase the degree of heat and sound insulation of the whole plate of about 10-20% and to improve incomparably the mechanical resistance and the planarity of the whole manufactured item. The plate 3 is preferably oriented with its inner channels in the direction of the longer side of the plate 1, so as to improve the degree of bending resistance of the whole manufactured item. On the longer sides of the layer 2 said plate 3 can be provided with creases or small cuts or simply with folds 4, 4' parallel to its cells, so that the end portions 103, 103' of said plate 3 surround the longitudinal edges of the insulating layer 2. The short sides of the layer 2 may also be folded in a similar way.

The cell-like plate 3 has proved to firmly cling to the insulating layer 2, so that it required no particular treatment and/or conditioning. Obviously, if needed, suitable means can be used to this purpose. The plate 3 can be for instance carried out so that its surface oriented towards the layer 2 has small longitudinal ribs firmly anchoring within said layer 2, the whole being easily inferable and achievable by a skilled technician.

If necessary, the plate 3 can be easily cut with a cutter so as to be suited to particular application needs and can be firmly fastened with glues to the surfaces it rests on. The plate 3 can be of any color or colorless, also so as to be cheaper.

## Claims

1. Insulated plate for padding and covering building structures, comprising an outer plate (1) comprising an intermediate insulating layer (2) made from any suitable insulating material, and a final protecting layer integral with the larger surface of said insulating layer,
- said final layer being formed by a cell-like extruded thermoplastic material (3), which greatly improves the mechanical resistance and the properties of heat and sound insulation of the whole structure, **characterized in that**
- said cell-like material is a plate (3) and has such a basis weight to be supplied on the application area rolled up on a spool.
- said cell-like plate (3) has an outer thickness of 1 to 4 mm, for instance of about 2-2.5 mm.
- said cell-like plate (3) has a maximum basis weight of around 500 g/sqm.

2. Insulated plate according to one or more of the preceding claims, in which said cell-like plate (3) is open with the opposite ends of its channels or cells, so that air can freely circulate therein.

3. Insulated plate according to one or more of the preceding claims, in which said cell-like plate (3) is oriented with the longitudinal direction of its cells in the direction of the longer side of the main plate (1).

4. Insulated plate according to one or more of the preceding claims, in which said cell-like plate (3) is folded on the perimeter or on at least two parallel sides (4) of its perimeter, so that at least two of its portions (103, 103') surround the longitudinal edges of the insulating layer (2).

5. Insulated plate according to one or more of the preceding claims, in which said cell-like plate (3) can be provided with small ribs on the surface oriented towards the insulating layer (2), so as to be firmly connected to said layer.

## Patentansprüche

1. Isolierplatte zum Schützen und Bedecken einer Gebäudestruktur, mit einer Ausßenplatte (1), die eine Zwischenisolierschicht (2) aufweist, die aus einem geeigneten lsoliermaterialhergestellt ist, und einer Schutzdeckschicht, die mit einer größeren Oberfläche der Isolierschicht integral ausgebildet ist, wobei die Deckschicht durch ein zellartig extrudiertes thermoplastisches Material (3) ausgebildet ist, welches die mechanische Widerstandskraft und die Eigenschaften hinsichtlich Hitze- und Geräuschisolation der Gesamtstruktur stark verbessert, **dadurch gekennzeichnet, dass** das zellartige Material eine Platte (3) ist und ein derartiges Flächengewicht aufweist, dass die Auftragsfläche durch Abrollen von einer Abwickelrolle aufgebracht werden kann, wobei die zellartige Platte (3) eine äußere Dicke von 1 -4 mm aufweist, beispielsweise von 2 - 2,5 mm, und wobei die zellartige Platte (3) ein maximales Flächengewicht von etwa 500 g/m² aufweist.

2. Isolierplatte nach einem oder mehreren der vorhergehenden Ansprüche, **dadurch gekennzeichnet, dass** die zellartige Platte (3) mit den gegenüberliegenden Enden ihrer Kanäle oder Zellen offen ausgebildet ist, so dass Luft frei darin zirkulieren kann.

3. Isolierplatte nach einem oder mehreren der vorhergehenden Ansprüche, **dadurch gekennzeichnet, dass** die zellartige Platte (3) in longitudinaler Richtung ihrer Zellen in Richtung der längeren Seite der Hauptplatte (1) ausgerichtet ist.

4. Isolierplatte nach einem oder mehreren der vorhergehenden Ansprüche, **dadurch gekennzeichnet, dass** die zellartige Platte (3) am Umfang oder zumindest an zwei parallelen Seiten (4) ihres Umfangs gehalten ist, so dass zumindest zwei ihrer Bereiche (103, 103') die longitudinalen Ecken der lsolierschicht (2) umgeben.

5. Isolierplatte nach einem oder mehreren der vorhergehenden Ansprüche, **dadurch gekennzeichnet, dass** die zellartige Platte (3) kleine Rippen auf ihrer Oberfläche in Richtung der Isolierschicht (2) aufweisen kann und **dadurch** fest mit der Schicht verbunden ist.

## Revendications

1. Panneau isolant pour protéger et couvrir des structures de bâtiment, comprenant un panneau (1) extérieur, comprenant une couche (2) intermédiaire isolante en tout matériau isolant approprié et une couche finale de protection intégrée à la plus grande surface de la couche isolante,
- la couche finale étant formée par une matière (3) thermoplastique extrudée alvéolaire, qui améliore beaucoup la résistance mécanique et les propriétés d'isolation thermique et sonique de la structure toute entière, **caractérisé en ce que**
- la matière alvéolaire est un panneau et a un poids de base telle qu'elle peut être fournie à la surface d'application enroulée sur une bobine.
- le panneau (3) alvéolaire a une épaisseur extérieure de 1 à 4 mm, par exemple d'environ 2 à 2,5 mm.
- le panneau (3) alvéolaire a un poids de base maximum d'environ 500 g/ₘ².

2. Panneau isolé suivant l'une ou plusieurs des revendications précédentes, dans lequel le panneau (3) alvéolaire est ouvert aux extrémités opposées de ses canaux ou alvéoles, de sorte que de l'air peut y circuler librement.

3. Panneau isolé suivant l'une ou plusieurs des revendications précédentes, dans lequel le panneau (3) alvéolaire est orienté en ayant la direction longitudinale de ses alvéoles dans la direction du grand côté du panneau (1) principal.

4. Panneau isolé suivant l'une ou plusieurs des revendications précédentes, dans lequel le panneau (3) alvéolaire est plié sur le périmètre ou sur au moins deux côtés (4) parallèles de son périmètre, de sorte qu'au moins deux de ses parties (103, 103') entourent les bords longitudinaux de la couche (2) isolante.

5. Panneau isolé suivant l'une ou plusieurs des revendications précédentes, dans lequel le panneau (3) alvéolaire peut être muni de petites nervures sur la surface orientée vers la couche (2) isolante, de manière à être relié solidement à la couche.
